# EUROPEAN PATENT APPLICATION

(11) **EP 1 115 165 A2**
(43) Date of publication of application: **11.07.2001**
(21) Application number: 00125429.1
(22) Date of filing: 20.11.2000
(51) Int. Cl.: H01M 2/10, B60K 1/04, H01M 8/06, H01M 8/04

(54) **Electrochemical cell engine arrangement**

(30) Priority: 06.01.2000 US 478671
(71) Applicant: General Motors Corporation, Detroit, Michigan 48265-3000 (US)
(72) Inventor: O'Connell, Daniel B., Rochester, NY 14612 (US); Stratton, Michael A., Rochester, NY 14624 (US); McManis, James V., Batavia, NY 14020 (US)
(74) Representative: Manitz, Finsterwald & Partner

(57) **Abstract**

An electrochemical engine in a vehicle comprises a fuel cell stack operable to produce electricity given hydrogen and oxygen, an air generator to supply oxygen to the fuel cell stack, and a first storage tank containing hydrogen-retention material which upon heating to a release temperature releases stored hydrogen to the fuel cell stack. The electrochemical engine further comprises a heat generator for producing heat for the hydrogen-retention material in the first storage tank. The electrochemical engine is located in a rear underbody compartment of the vehicle beneath a vehicle floor. The heat generator and the first storage tank are located longitudinally forward and closely adjacent to the fuel cell stack, and the air generator is longitudinally rearward and closely adjacent to the fuel cell stack.

## Description

### TECHNICAL FIELD

The present invention relates to an electrochemical engine arrangement in a vehicle.

### BACKGROUND OF THE INVENTION

As fuel cell power plants are being integrated into useable vehicles, developing efficient ways of supplying the fuel needed to operate the fuel cell stack becomes more critical. Hydrogen gas is the common fuel input to the stack. It may be reformed on-board a vehicle by processing fuels such as gasoline or methanol through a reformer to convert the fuel to reformate comprising hydrogen, carbon dioxide, carbon monoxide, and water vapor. The reformate may be passed through a shift converter and gas purifiers to remove carbon monoxide before delivering the hydrogen to the fuel cell stack. This complete reformation process is not only complex to engineer, but consumes valuable packaging space and mass.

As an alternative to reforming fuels on-board, hydrogen gas may be stored on-board in suitable tanks. While pure hydrogen gas is an efficient fuel, storing it on-board a vehicle has drawbacks related to packaging and mass. Instead of storing hydrogen in its gaseous state, hydrogen may be taken-up and captured by a hydrogen-retention material contained within an on-board storage tank.

With any of the fuel storage methods described above, packaging of the hardware becomes an issue. It is important not to impede on the requirements for maximized passenger compartment and storage space as these are important customer considerations. Fuel cells that are arranged at or about the vehicle center of gravity may restrict passenger compartment volume.

### SUMMARY OF THE INVENTION

The present invention provides a novel arrangement for an electrochemical engine in a vehicle, which stores hydrogen on-board in a storage tank. The storage tank contains hydrogen-retention material which takes-up and stores hydrogen. Since components for reforming a fuel into hydrogen are not required, the arrangement of the electrochemical engine is quite versatile. It may be packaged in the rear underbody compartment beneath the vehicle floor or in the more traditional front rail compartment. The engine arrangement does not reduce total passenger compartment and vehicle storage space.

The components are arranged in close proximity to provide system efficiencies including thermal, packaging, and pumping. Shorter interconnect lengths are desired to minimize system pressure drops.

### BRIEF DESCRIPTION OF THE DRAWINGS

FIG. 1 is a schematic illustration of an electrochemical engine;
FIG. 2 is a schematic plan view of a vehicle embodying the engine of FIG. 1;
FIG. 3 is a schematic side view of FIG. 2;
FIG. 4 is a schematic plan view of a second embodiment of a vehicle with the engine of FIG. 1; and
FIG. 5 is a schematic side view of FIG. 4.

### DESCRIPTION OF THE PREFERRED EMBODIMENT

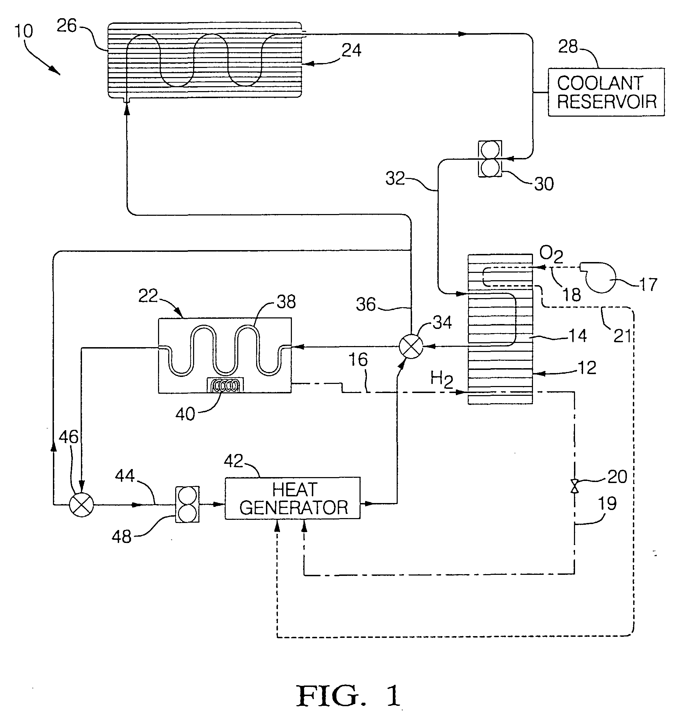

First with reference to FIG. 1, the operation of an electrochemical engine (ECE), shown generally as 10, is described. Electricity is generated by a known electrochemical reaction between hydrogen and oxygen within a fuel cell stack 12. The fuel cell stack 12 comprises a series of individual fuel cells 14, as is known in the art. Hydrogen gas is fed through a hydrogen delivery line 16, to the anode side of the fuel cells 14. An air generator 17, which may include a compressor and a humidifier, supplies humidified oxidant through an oxidant line 18 to the cathode side of the fuel cells 14. The cathode is separated from the anode by an electrolyte. Electricity and heat are generated in the fuel cell stack 12. An exhaust valve 20 from the anode side to a hydrogen exhaust line 19 is generally closed such that all the hydrogen is consumed in the fuel cell stack 12, but is operable to open and release unconsumed hydrogen. By-products of the cathode, including nitrogen and unconsumed oxygen are exhausted through a cathode exhaust line 21.

Hydrogen, for fueling the electrochemical process in the fuel cell stack 12, is stored in a storage tank 22 in the ECE 10. The storage tank 22 contains "hydrogen-retention material", not shown. By this, it is meant a material which is capable of reversibly taking-up and storing hydrogen at a hydrogen-storage temperature, and releasing it at a release temperature, which is greater than the hydrogen-storage temperature. In one embodiment, the hydrogen-retention material comprises a metal, such as sodium-aluminum-chloride, lanthanum-nickelide, titanium, or nickel, which reacts with and stores the hydrogen as a hydride of the metal. A particularly preferred such metal comprises sodium-aluminum-chloride, which has a release temperature for most of its retained hydrogen at or near the operating temperature of the fuel cell stack 12. This allows by-product heat from the fuel cell stack 12 to be used to release the hydrogen from the hydride.

The ECE 10 further includes a thermal management system 24 including a radiator 26, a coolant reservoir 28, a primary coolant pump 30 and a primary coolant flow circuit 32 to circulate coolant throughout the engine. The primary coolant flow circuit 32 extends from the coolant reservoir 28, through the primary coolant pump 30, the fuel cell stack 12, the storage tank 22, the radiator 26, and back to the coolant reservoir 28. A coolant-distribution valve 34 is interposed between the fuel cell stack 12 and the storage tank 22 along the primary coolant flow circuit 32. A bypass coolant flow line 36 extends from the distribution valve 34 to the radiator 26.

The primary coolant flow circuit 32 delivers low temperature coolant to the fuel cell stack 12 to transfer the heat by-product out of the stack and deliver it to the storage tank 22. The storage tank 22 contains conduits 38 (e.g. coils) through which the heated coolant is circulated to heat the hydrogen-retention material. Heated coolant may also bypass the storage tank 22 and be delivered directly to the radiator 26 via the bypass coolant flow line 36 from the coolant-distribution valve 34. The coolant-distribution valve 34 is operable to direct heated coolant from the fuel cell stack 12 to either or both the storage tank 22 or the radiator 26.

To initiate ECE start-up, an electric heating element 40 may be provided in, or adjacent to, the storage tank 22 for providing initial electrically-generated heat to the hydrogen-retention material for releasing hydrogen gas to fuel the fuel cell stack 12. The heating element 40 need only operate for a short period of time until the ECE 10 becomes self-sustaining, meaning the fuel cell stack 12 is producing enough heat to release hydrogen from the storage tank 22 to fuel the stack. Therefore, the parasitic energy expended by the heating element 40 is minimized.

With any of the hydrogen-retention materials employed, a majority of the hydrogen may be released at the release temperature, but to completely release substantially all of the hydrogen, the temperature may need to be elevated to a higher, superheated release temperature. As an example, with doped sodium-aluminum-chloride hydride, approximately 70% of the hydrogen stored may be released by the by-product heat routed from the fuel cell stack 12, which operates at approximately 80°C. To release the balance of the hydrogen, the hydride must be "superheated" to a superheated release temperature of approximately 150°C.

Superheating the hydrogen-retention material may be accomplished by including a heat generator 42 within a superheater coolant loop 44, and isolating coolant within this loop so that the heat generator may heat it. To isolate the superheater coolant loop 44 from the balance of the coolant flow, a bypass valve 46 is included intermediate the storage tank 22 and the radiator 26. Further, a secondary pump 48 is included in the superheater coolant loop 44 to circulate the superheated coolant. Therefore, the superheater coolant loop 44 includes the coolant-distribution valve 34, the storage tank 22, the bypass valve 46, the secondary pump 48, and the heat generator 42.

The heat generator 42 may operate as a catalytic reactor where unconsumed hydrogen is exhausted by the anode of the fuel cell stack 12 and is routed through hydrogen exhaust line 19 to the heat generator for catalytic combustion therein. Additionally, nitrogen and unconsumed oxygen exhausted by the cathode are routed to the heat generator 42 in the cathode exhaust line 21. The combustion reaction in the heat generator 42 generates thermal energy which may be transferred to the storage tank 22 via the superheater coolant loop 44. Including the heat generator 42 in the ECE 10 allows substantially all of the hydrogen stored in the hydrogen-retention material to be utilized. The heat generator 42 is an efficient alternative to generating heat electrically.

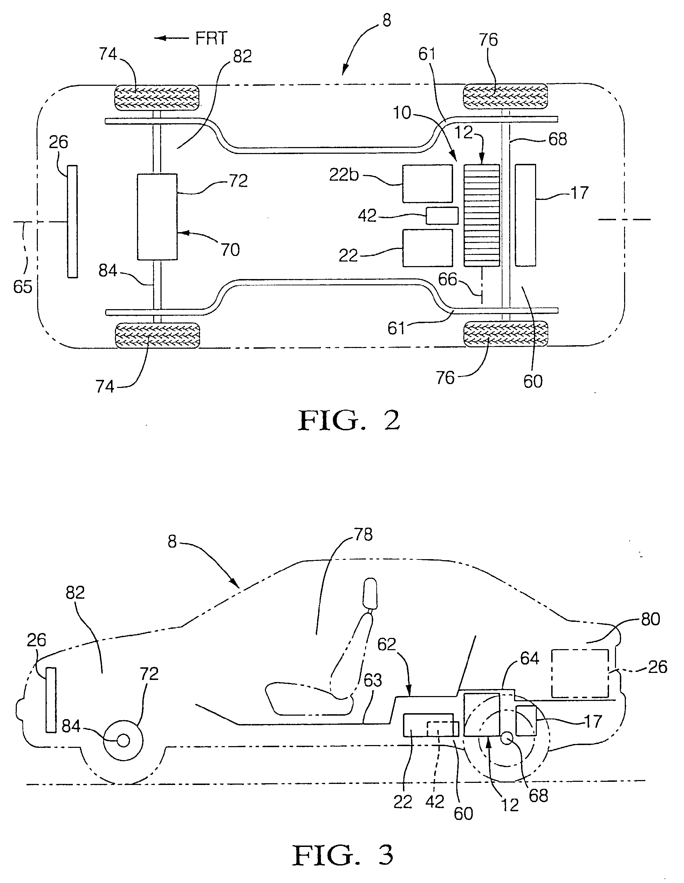

Next, with reference to FIGS. 2 and 3, a first arrangement for packaging the ECE 10 in vehicle 8 is described. The ECE 10, comprising at least storage tank 22, heat generator 42, air generator 17, and fuel cell stack 12, is centrally located in the rear underbody compartment 60 of the vehicle 8. The rear underbody compartment 60 is defined by the volume between the rear frame rails 61 and below the vehicle floor 62. The vehicle floor 62 includes a seat floor portion 63 which supports the occupant seats and a trunk floor portion 64 to support items stored in the rear storage space 80. Therefore the ECE 10 is located below the vehicle floor 62. The heat generator 42 and storage tank 22 are located on a first side of the fuel cell stack 12, preferably longitudinally forward with respect to the vehicle longitudinal axis 65, and closely adjacent to the fuel cell stack 12. This arrangement allows released hydrogen to be easily routed from the storage tank 22 to the fuel cell stack 12. The air generator 17 is located on a second side of the fuel cell stack 12, preferably longitudinally rearward and closely adjacent to the fuel cell stack 12. Likewise, this placement allows oxygen to be easily routed to the fuel cell stack 12.

In order to increase hydrogen storage capacity, a second storage tank 22b may be added. In such a case, the heat generator 42 is preferably located between and adjacent to the first storage tank 22 and the second storage tank 22b. The length of the fuel cell stack 12 defines a stack axis 66 which is parallel to a rear axle 68 of the vehicle 8. The fuel cell stack 12 is located longitudinally forward of the rear axle 68. The ECE 10 is mounted to the vehicle structure in a manner known in the art such as through damped engine mounts.

The vehicle 8 includes a drive system 70 which comprises at least one electric drive motor 72 and incorporated controller. The drive system 70 is connected to a pair of front vehicle wheels 74 such as by a front axle 84. Alternatively, although not illustrated, the drive motor may be operatively connected to a pair of rear vehicle wheels 76 such as by rear axle 68. A further configuration not shown provides a drive motor at each of the front wheels and/or rear wheels such that the drive system may be used to power a front-wheel drive, rear-wheel drive, or an all-wheel drive vehicle.

The radiator 26 of the thermal management system 24 is shown located in a conventional location at the forward end of the front rail compartment 82. Alternatively, a radiator 26 may be located on the outboard side of the rear storage space 80, as shown in phantom in FIG. 3.

This ECE arrangement does not impede on the passenger compartment 78. Further, total vehicle storage space is maintained as there is rear storage space 80 and additional storage space available in the front rail compartment 82. Both passenger compartment space and total vehicle storage space are important customer considerations.

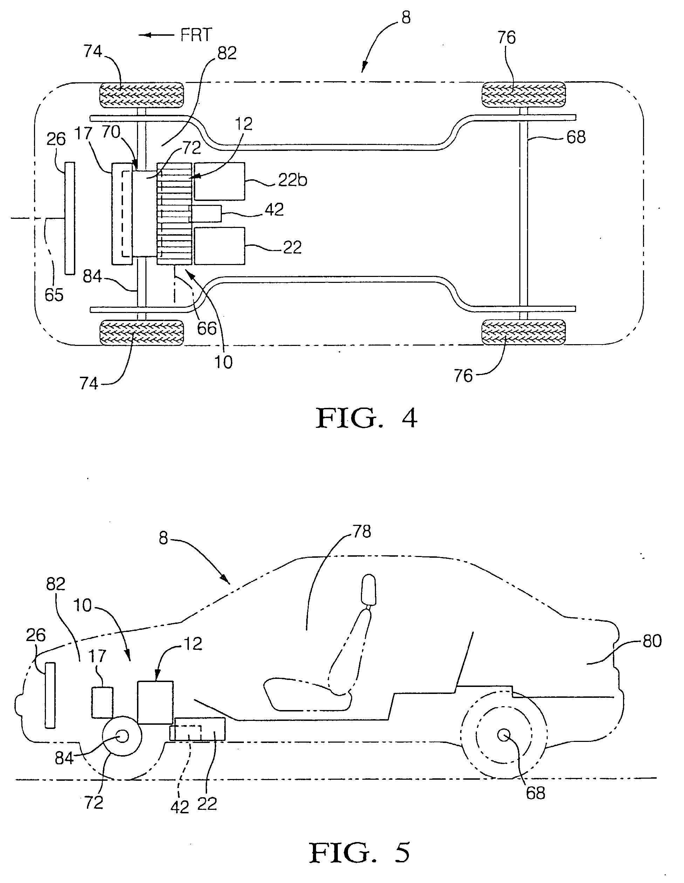

A second embodiment for the arrangement of the ECE 10 is illustrated in FIGS. 4 and 5. Here the ECE 10 is packaged in the space traditionally occupied by an internal combustion engine. The ECE 10, comprising first storage tank 22, heat generator 42, air generator 17, and fuel cell stack 12, is centrally located in the front rail compartment 82 of the vehicle 8. The heat generator 42 and first storage tank 22 are located on a first side of the fuel cell stack 12, preferably longitudinally rearward and closely adjacent to the fuel cell stack 12. This arrangement allows released hydrogen to be easily routed from the storage tank 22 to the fuel cell stack 12. The air generator 17 is located on a second side of the fuel cell stack 12, preferably longitudinally forward and closely adjacent to the fuel cell stack 12. Likewise, this placement allows oxygen to be easily routed to the fuel cell stack 12.

In the case where a second storage tank 22b in added to the ECE 10, the heat generator 42 is preferably located between and adjacent to the first storage tank 22 and the second storage tank 22b. The fuel cell stack axis 66 is parallel to front axle 84 of the vehicle 8 such that the fuel cell stack 12 is oriented parallel to the front axle. The fuel cell stack 12 is located longitudinally rearward of the front axle 84. The ECE 10 is mounted to the vehicle structure in a manner known in the art such as through damped engine mounts.

The drive system 70 is attached to either the front or rear axle 84 or 68 as determined by the drive configuration desired similar to a differential in a drive system for an internal combustion engine. The electric drive motor 72 replaces the internal combustion engine differential which converts engine rotation into wheel rotation.

The radiator 26 of the thermal management system 24 is located longitudinally forward of the air generator 17 to provide adequate cooling to the ECE 10 as is typical of a vehicle radiator. Since the general arrangement corresponds to a conventional layout for an internal combustion engine, neither the passenger compartment 78 nor the rear storage space 80 is compromised.

The close proximity of adjacent components in the arrangements illustrated improve overall efficiencies by minimizing the length of connections between components, which minimizes system pressure drops and thermal losses.

The foregoing description of the preferred embodiment of the invention has been presented for the purpose of illustration and description. It is not intended to be exhaustive, nor is it intended to limit the invention to the precise form disclosed. It will be apparent to those skilled in the art that the disclosed embodiment may be modified in light of the above teachings. The embodiment was chosen to provide an illustration of the principles of the invention and its practical application to thereby enable one of ordinary skill in the art to utilize the invention in various embodiments and with various modifications as are suited to the particular use contemplated. Therefore, the foregoing description is to be considered exemplary, rather than limiting, and the true scope of the invention is that described in the following claims.

## Claims

1. An electrochemical engine in a vehicle, comprising:
a fuel cell stack defining a stack axis operable to produce electricity given hydrogen and oxygen, an air generator to supply oxygen to said fuel cell stack, and a first storage tank containing hydrogen-retention material which upon heating to a release temperature releases stored hydrogen to said fuel cell stack, wherein said electrochemical engine is located in a rear underbody compartment of the vehicle beneath a vehicle floor, said first storage tank located on a first side of said stack axis and closely adjacent to said fuel cell stack, and said air generator located on a second side of said stack axis and closely adjacent to said fuel cell stack.

2. An electrochemical engine, as defined in claim 1, further comprising a heat generator for producing heat for said hydrogen-retention material in said first storage tank, wherein said heat generator and said first storage tank located longitudinally forward of said fuel cell stack and said air generator located longitudinally rearward of said fuel cell stack.

3. An electrochemical engine, as defined in claim 2, wherein said stack axis of said fuel cell stack is parallel to a rear axle of the vehicle and said fuel cell stack is longitudinally forward of said rear axle.

4. An electrochemical engine, as defined in claim 2, further comprising a second storage tank wherein said heat generator is located between and adjacent to said first storage tank and said second storage tank.

5. An electrochemical engine, as defined in claim 2, further comprising a radiator on an outboard side of a rear storage space above said vehicle floor for cooling said fuel cell stack.

6. An electrochemical engine in a vehicle, comprising:
a fuel cell stack defining a stack axis operable to produce electricity given hydrogen and oxygen, an air generator to supply oxygen to said fuel cell stack, and a first storage tank containing hydrogen-retention material which upon heating to a release temperature releases stored hydrogen to said fuel cell stack, wherein said electrochemical engine is located within a front rail compartment of the vehicle, said first storage tank located on a first side of said stack axis and closely adjacent to said fuel cell stack, and said air generator located on a second side of said stack axis and closely adjacent to said fuel cell stack.

7. An electrochemical engine, as defined in claim 6, further comprising a heat generator for producing heat for said hydrogen-retention material in said first storage tank, wherein said heat generator and said first storage tank located longitudinally rearward of said fuel cell stack and said air generator located longitudinally forward of said fuel cell stack.

8. An electrochemical engine, as defined in claim 7, wherein said stack axis is parallel to a front axle of the vehicle such that said fuel cell stack is oriented parallel to said front axle, and said fuel cell stack is longitudinally rearward of said front axle.

9. An electrochemical engine, as defined in claim 7, further comprising a second storage tank wherein said heat generator is located between and adjacent to said first storage tank and said second storage tank.

10. An electrochemical engine, as defined in claim 7, further comprising a radiator located longitudinally forward of said air generator to cool said fuel cell stack.
